# EUROPEAN PATENT SPECIFICATION

(11) **EP 3 314 956 B1**
(45) Date of publication and mention of the grant of the patent: **16.09.2020**
(21) Application number: 16827194.8
(22) Date of filing: 14.07.2016
(51) Int. Cl.: H04W 52/02

(54) **SMART POWER MANAGEMENT SYSTEM AND METHOD FOR DOWNLOADING PHOTOS**
INTELLIGENTES LEISTUNGSVERWALTUNGSSYSTEM UND VERFAHREN ZUM HERUNTERLADEN VON FOTOS
SYSTÈME DE GESTION DE PUISSANCE INTELLIGENT ET PROCÉDÉ DE TÉLÉCHARGEMENT DE PHOTOS

(30) Priority: 21.07.2015 US 201514805038
(43) Date of publication of application: 02.05.2018
(73) Proprietor: Huawei Technologies Co., Ltd., Longgang District Shenzhen, Guangdong 518129 (CN)
(72) Inventor: SHI, Qian, Plano, TX 75024 (US); LIN, Jingping, Plano, TX 75024 (US); LUO, Weilin, Plano, TX 75024 (US); JIA, Zhiping, Plano, TX 75024 (US)
(74) Representative: Epping - Hermann - Fischer
(86) International application number: PCT/CN2016/090076
(87) International publication number: WO 2017/012503

(56) References cited:
- WO-A1-2006/127039
- CN-A- 102 611 786
- CN-A- 103 763 737
- US-A1- 2004 102 228
- US-A1- 2008 253 311
- US-A1- 2012 194 976
- US-A1- 2012 303 171
- US-A1- 2014 173 036

## Description

### BACKGROUND

Smart watches, head mounted displays and other wearable computers represent the next generation of integrating computing devices into our daily lives. Worn with the convenience and style of conventional fashion accessories, these devices also provide computing power and network connectivity. While providing a great many benefits, wearable computers have a few shortcomings, such as for example limited storage capacity and short battery life. As such, the downloading of photos and other larger data files can be problematic for wearable computers. In addition to lacking the space to store many large data files, the process of downloading data uses valuable battery life. This problem is exacerbated by the fact that viewing photos and other media content is one of the most popular uses of mobile computing devices.

US20040102228A1 discloses a communication apparatus driven by a battery, comprising: battery level detecting means for detecting a level of said battery; transceiving availability determining means for obtaining a remaining operating time up to shutdown of the communication apparatus due to exhaustion of said battery based on the level of the battery detected by said battery level detecting means and obtaining the amount of data which can be transceived by the communication apparatus before exhaustion of said battery based on the remaining operating time, and reporting means for reporting said amount of data which can be transceived.

US20080253311A1 discloses a system and method for real-time data transmission using adaptive time compression that is based on an estimation of network load, one or more media properties of the real-time data, and/or a battery level of the mobile device.

### SUMMARY

The invention is defined in the claims. In the following, parts of the description and drawings referring to embodiments which are not covered by the claims are not presented as embodiments of the invention, but as examples useful for understanding the invention. In one embodiment, the present technology relates to a computing device comprising: a rechargeable battery; and a processor operable to: receive one or more power management policies relating to conditions under which a file to be downloaded from a remote location is to be compressed before download; identify whether a received power management policy of the one or more power management policies applies to a file to be downloaded based on at least a level of power remaining in the rechargeable battery, and generate an instruction to reduce a size of the file before download if the received power management policy is identified as being applicable to the file to be downloaded.

In another embodiment, the present technology relates to a computing device comprising: a rechargeable battery; a communications interface operable to download files from a remote location; a computer readable memory operable to store one or more power management policies relating to conditions under which a file from the remote location is to be compressed before download; and a processor operable to determine whether a file is to be compressed before download in accordance with a power management policy of the one or more power management polices based on at least a level of power remaining in the rechargeable battery and a size of the file to be downloaded, and the processor operable to generate an instruction to reduce a size of the file before download in accordance with the power management policy.

In a further embodiment, the present technology relates to a computing device associated with a cloud service, the computing device comprising: a computer readable memory operable to store a file to be downloaded from a remote computing device; and a processor operable to: receive a request from the remote computing device to download the file, the request including a notification indicating a power level of the remote computing device; receive one or more power management policies relating to conditions under which files are to be compressed before download; identify whether a received power management policy of the one or more power management policies applies to the file to be downloaded based on at least the level of power indicated in the notification, and reduce a size of the file before download if the received power management policy is identified as being applicable to the file to be downloaded.

In a further embodiment, the present technology relates to a method of managing power use in a computing device, comprising: receiving one or more power management policies relating to conditions under which a file to be downloaded is to be compressed before download; identifying whether a received power management policy of the one or more power management policies applies to the file to be downloaded based on at least a level of power remaining in the computing device; and generating an instruction to reduce a size of the file before download if the received power management policy is identified as being applicable to the file to be downloaded.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIGURE 1 is a diagram of a network topology for implementing the present technology.
FIGURE 2 is a block diagram of an example computing device such as a smart watch.
FIGURE 3 is a flowchart for setting up power management policies according to embodiments of the present technology.
FIGURE 4 is a sample template interface for creating power management policies according to embodiments of the present technology.
FIGURE 5 is a sample script interface for creating power management policies according to embodiments of the present technology.
FIGURE 6 is a flowchart showing a power management method according to embodiments of the present technology.
FIGURE 7 is a flowchart showing a power management method according to alternative embodiments of the present technology.
FIGURE 8 is a block diagram of an example computing environment for implementing a power management method and other aspects of the present technology.

### DETAILED DESCRIPTION

The present technology, roughly described, relates to a system and method for smart downloading and viewing of photos and other content on a computing device such as a wearable computer. In embodiments, the computing device may include a policy agent implementing one or more stored policies relating to download parameters for photos or other content based in part on remaining battery life in the computing device. In embodiments, the stored policies, referred to herein as power management policies, indicate the size reduction for image or media files to be downloaded to the computing device.

In operation, a user of a wearable computer or other computing device makes a request to download a photo or other content stored on a remote server or computing device. The policy agent may then check to see if there is a stored power management policy applicable to the selected content. If such a policy is found, a request for the content file is sent, together with a policy instruction directing modifications to the content file before it is downloaded. In embodiments, the request may be sent to a cloud service, which accesses the requested file from a cloud service data store or other network-connected computer. The cloud service then modifies a copy of the file per the received policy instruction and downloads the copy to the wearable computer.

In further embodiments, instead of going through the cloud service, the file request and policy instruction may be sent to another computing device having a direct network connection to the wearable computer. The computing device receiving the request may retrieve and modify the requested file per the received policy instruction, and download the file to the wearable computer.

It is understood that the present invention may be embodied in many different forms and should not be construed as being limited to the embodiments set forth herein. Rather, these embodiments are provided so that this disclosure will be thorough and complete and will fully convey the invention to those skilled in the art. Indeed, the invention is intended to cover alternatives, modifications and equivalents of these embodiments, which are included within the scope and spirit of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details.

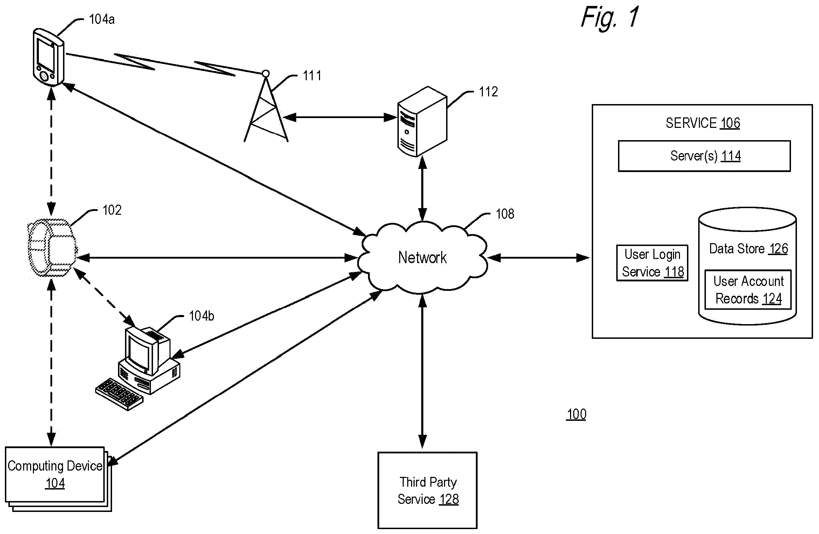

Fig. 1 shows a diagram of a sample network topology 100 for implementing embodiments of the present technology. Network topology 100 includes a computing device 102 which in embodiments may be a wearable computer such as a smart watch. While the example of a smart watch is shown, the computing device 102 may be other wearable computers, including for example glasses and other head mounted displays, head, arm or other bands worn on a body part, smart textiles and fabrics, headwear and jewelry such as rings and bracelets. Other wearable computers are contemplated. Additionally, while computing device 102 may be a wearable computer or other computer with limited battery life, it is understood that computing device 102 may be any of the computing devices described herein in further embodiments.

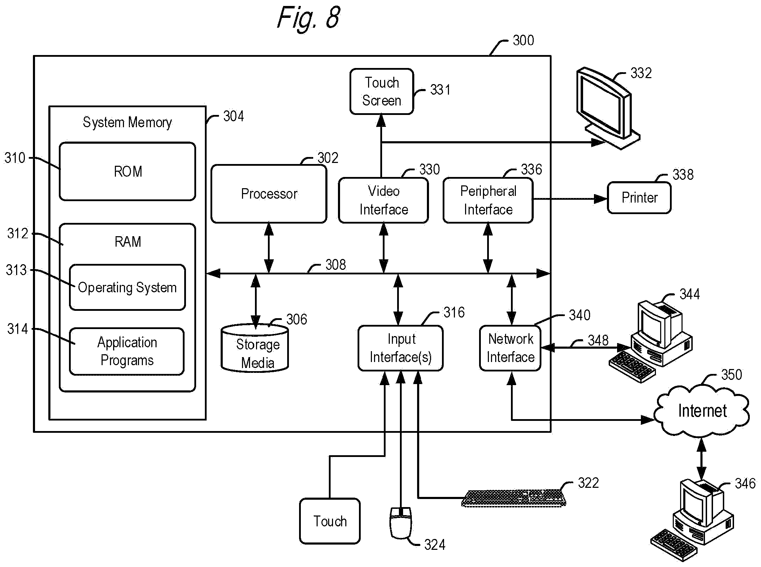

Computing device 102 may be capable of connecting to a cloud service 106 (explained below) via a network 108. The cloud service 106 is in turn capable of connecting to one or more computing devices 104 via the network 108. The computing devices 104 may for example include a smart phone 104a, a desk top computer 104b and/or a variety of other computing devices 104. In general, computing devices 104 may be desktop computers, laptop computers, tablets, cellular telephones, television/set top boxes, video game consoles, automobile computers, cameras and smart appliances. Other computing devices are contemplated. An example of the components of a computing device 102 and/or 104 is set forth below with respect to Fig. 8.

In embodiments including a smart phone 104a, the phone 104a may be a mobile telephone capable of communicating with network 108 via wireless protocols and/or via a mobile telephone network. The mobile telephone network may include base stations 111 (one of which is shown) for forwarding data and software from smart phone 104a to a mobile network backbone 112. Backbone 112 may in turn have a network connection to network 108.

As explained below, the computing device 102 may access files from one or more of the computing devices 104 via network 108. However, in embodiments, the computing device 102 may access files stored locally on the cloud service 106 and/or a third-party service 128 (explained below). Thus, in embodiments, the computing devices 104 may be omitted. Additionally, as explained below, computing device 102 may access files directly from computing devices 104 (as indicated by the dashed lines in Fig. 1). Thus, in embodiments, the cloud service 106 and/or third-party service 128 may be omitted.

In embodiments, the network 108 may comprise the Internet, though other networks including, but not limited to, a LAN or WAN are contemplated. Computing devices 102/104 may be connected to each other by direct wireless personal area networks (WPANs) and/or peer-to-peer connections in addition to, or instead of, their connection to network 108.

The cloud service 106 may for example be an enterprise service provider, though it need not be in further embodiments. Cloud service 106 may include one or more servers 114, which may for example include a web server, an ftp server supporting file transfer and/or a media server for organizing and distributing selected photo and other image files, video files, audio files and other media. Server(s) 114 may be other types of servers in further embodiments. A server 114 may also be referred to herein as a computing device.

The cloud service 106 also provides a collection of services which applications running on computing device 102 may invoke and utilize. For example, computing device 102 may invoke user login service 118, which is used to authenticate a user seeking secure media or other files from cloud service 106 and/or a computing device 104. A user may authenticate him or herself to the login service 118 by a variety of authentication protocols, including for example by a user or device ID and a password.

Where authentication is performed by the user login service 118, the user/device ID and password may be stored in user account records 124 within a data store 126. Data store 126 may further include a variety of other data, including user profiles, user contacts, friends lists, etc. The data store 126 may also be cloud storage for photo, image, media and other types of files belonging to the user of computing device 102 and/or files belonging to others. While servers 114, user login service 118 and data store 126 are shown as part of a single cloud service 106, some or all of these components may be distributed across different services in further embodiments.

Fig. 1 further shows a third-party service 128, which may for example be a website, cloud storage site or content provider independent from cloud service 106. Third-party service 128 may store and/or serve photos and other image files, video files and/or audio files.

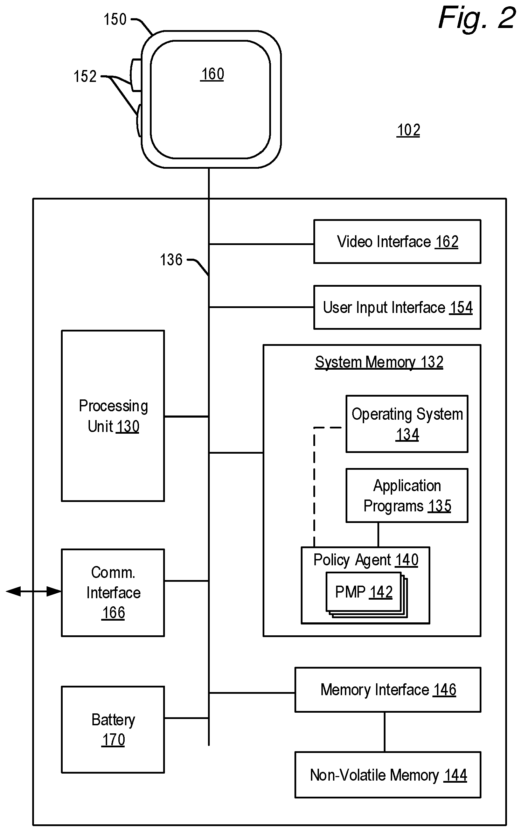

Details relating to an example of computing device 102 and/or 104 are provided below with reference to Fig. 8. However, Fig. 2 generally shows components of computing device 102 where the device 102 is for example a wearable computer such as a smart watch. The device 102 includes a processing unit 130 communicating with a system memory 132 via a system bus 136. The processing unit 130 may be a standardized processor, a specialized processor, a microprocessor, or the like that may execute instructions stored in system memory 132 for performing processes described herein.

The system memory 132 may include a random access memory into which may be loaded program modules including an operating system 134 and one or more application programs 135. In embodiments, the system memory 132 may also load a policy agent 140 defining one or more power management policies (PMP) 142 as described hereinafter. The policy agent 140 may be implemented as an application program 135 (or part of an application program 135), but it may alternatively be part of the operating system 134 as indicated by the dashed line in Fig. 2. The program modules may be loaded into the system memory 132 from a non-volatile memory 144 via a memory interface 146. The non-volatile memory 144 may also store defined power management policies as explained below.

The housing 150 of the computing device 102 may include input buttons 152 for receiving user selection and input. These and other input devices may be connected to the processing unit 130 through a user input interface 154 coupled to the system bus 136. The housing 150 may include a display 160 which may be connected to the system bus 136 via an interface, such as a video interface 162. As noted above, the computing device may communicate with other devices via a network 108, such as the internet and/or a wireless personal area network, to download image files and other content. The computing device 102 may include a network adaptor or communications interface 166 for this purpose. The various components of the computing device 102 described above and hereinafter may be powered by a rechargeable battery 170.

As noted above, in embodiments where for example computing device 102 is a wearable computer such as a smart watch, the charge held by battery 170 may be small, and it is desirable to minimize power drain so as to maximize battery life before recharge is required. Similarly, the storage capacity of non-volatile memory 144 may also be small, and it is desirable to avoid storing large files locally on the computing device 102.

One cause of battery drain is the downloading of files to the computing device 102 from remote locations. High resolution photograph and other image files can be quite large, for example 1MB, 5MB or 10MB. Downloading these types of files results in significant drain on the battery 170. Therefore, in accordance with aspects of the present technology, the policy agent 140 may implement one or more power management policies 142 for selectively reducing the size of image or other types of files before they are downloaded. In general, the power management policies 142 may dictate the size (or size reduction) of at least certain downloaded files, based on the amount of battery life remaining in battery 170 at the time of the download.

Decreasing the size of downloaded files provides less drain on battery 170 during download to thereby conserve and maximize battery life remaining in battery 170. While the downloaded file has a lower resolution than the original file, it is typically fine for viewing on the display 160, and the trade-off of resolution for improved battery life is often worthwhile.

It is further understood that the present technology is not limited to compressing photographs, or other image files, before download. A wide variety of other file formats may be downloaded to the computing device 102, at least some of which may be compressed in accordance with the present technology prior to being downloaded. Such files may include for example video files and audio files. In general, the present technology may be used on any file which may be compressed prior to download. Files which may be compressed may be identified by the present technology for example by the file extension associated with the file.

Any of a wide variety of power management policies 142 may be defined and stored for use by the policy agent 140. These policies may range from simple policies to highly detailed policies resulting in many different levels of compression for many different power levels, file sizes and/or contextual circumstances. As an illustrative example, a simple power management policy may be defined which states:
IF battery level < 10%, THEN reduce source file by 50% for source files larger than 100KB.

This power management policy is by way of example only, and it is understood that simple power management policies 142 may incorporate any of a wide variety of variations from this example. For example, the threshold battery level (10% in this example) may be varied upward or downward. Additionally, the percentage of file size reduction (50% in this example) may be varied upward or downward. Further still, the threshold file size (100 KB in this example) may be varied upward or downward. Additionally, the syntax of the policy statement is by way of example, and it is understood that the actual syntax of a power management policy 142 may vary depending on the type of computing device executing the power management policy.

As a further illustrative example, a power management policy 142 may include more than one condition, resulting in different size reductions for different files. For example, a power management policy may be defined which states:
IF battery level < 15%,
IF source file is ≥ 10MB, reduce source file by 90%,
AND IF source file is ≥ 5MB and < 10MB, reduce source file by 75%,
AND IF source file is ≥ 500KB and <5MB, reduce source file by 50%.

Again, this power management policy is by way of example only, and it is understood that other power management policies 142 may incorporate any of a wide variety of variations from this example. As a further example, instead of a percentage reduction in one or more of the above conditional clauses, the power management policy may simply state to reduce the downloaded file to some predefined size:
IF battery level < 5%, AND IF source file is > 50KB, reduce source file to 50KB.

It is understood that power management policies 142 may be defined to reduce the size of downloaded files for any power level of the computing device 102 (including 100% (fully charged) power levels). Power management policies 142 may be defined to reduce source files of any sizes (though below some threshold source file size, file reduction does not provide appreciable gains in power conservation). And power management policies 142 may be defined to reduce the size of downloaded files to any percentage or reduced size of the source file (though if the reduction of the downloaded file is too great, the resolution of the downloaded file may be too poor).

It is understood that other contextual circumstances may be incorporated into power management policies 142 in further embodiments. For example, if a user is home (where they may have ready access to a battery charger), a first set of one or more power management policies 142 may apply, and when a user is away from home, a second set of one or more power management policies 142 may apply. Another contextual circumstance that may be incorporated into a power management policy 142 is whether the computing device 102 is plugged in and recharging. That is, a battery may have very little battery life, but is not in danger of running out as it is charging. In this circumstance, the computing device 102 may detect that it is plugged in and charging, and apply a different set of power management policies that would otherwise apply to the computing device at its current charge level.

A wide variety of other contextual circumstances may be incorporated into power management policies in further embodiments, including for example temporal contextual circumstances (e.g., time of day or day of the week) and other geographic contextual circumstances. The computing device 102 may include a global positioning system (GPS) chipset to identify a geographic location of the computing device 102 for power management policies incorporating geographic contextual circumstances.

Power management policies 142 may be defined for use by the policy agent 140 in a wide variety of manners. In one example, the computing device 102 may come from the manufacturer with a default set of one or more power management policies 142. These default power management policies may for example be any of the power management policies 142 discussed above. A default set of power management policies may instead define a general power management framework, which may then be customized by a user of computing device 102. For example, a default framework of power management policies 142 may define at least one of three separate modes of operation of computing device 102 with respect to power management:
IF < [threshold power level], THEN [optimize device for maximum battery life].
IF < [threshold power level], THEN [optimize device for combination of performance and maximum battery life].
IF < [threshold power level], THEN [optimize device for performance].

The user may receive this default framework of power management policies, and customize and implement one or more of these policies by providing a threshold power level, and his/her particular preferences as to what it means to optimize battery life and/or device performance.

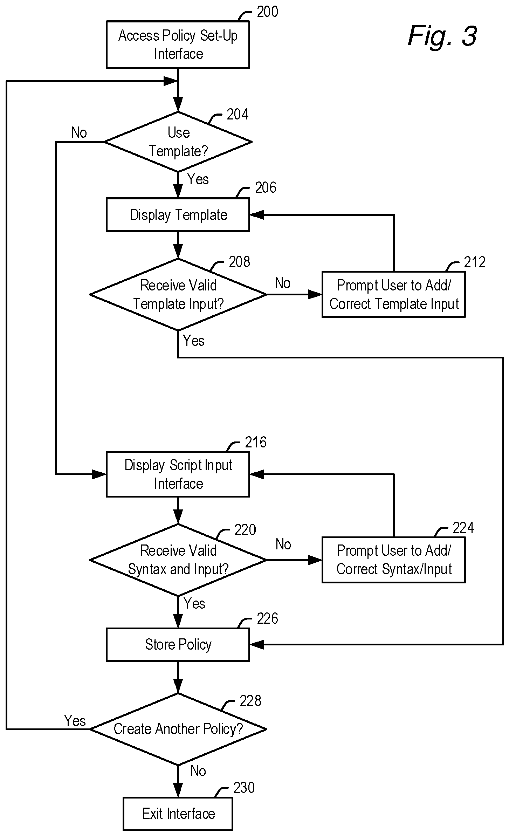

Instead of, or in addition to, default power management policies 142, a user may create his or her own power management policies 142. A method of customizing default power management policies, and for creating power management policies from scratch, will now be described with reference to the flowchart of Fig. 3. It is understood that the method of customizing or creating power management policies 142 described below may be performed using a computing device 102 such as a wearable computer. Alternatively, power management policies may be created from a computing device 104, such as for example a desktop computer, and then downloaded and stored in the computing device 102, either directly or via the cloud service 106. In further embodiments, a power management policy may be created on computing device 102 or 104, and then uploaded to and used by the cloud service 106. In this embodiment, explained below, the cloud service 106 may have a server 114 running its own policy agent 140.

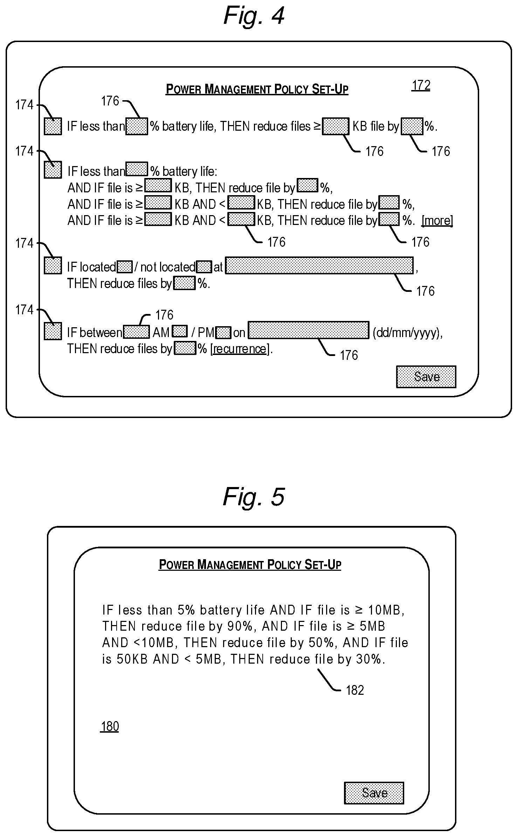

A method of creating and/or editing power management policies 142 will now be explained with reference to the flowchart of Fig. 3 and the views of Figs. 4 and 5. Figs. 4 and 5 illustrate user interfaces for generating power management policies, for example on a smart phone, tablet or desktop computer. While the display size of a smart watch or other wearable computer may be smaller, the interfaces of Figs. 4 and 5 may be adapted for use on such devices. The steps for creating and/or editing a power management policy may for example be implemented by the policy agent 140.

In step 200, a user may access a policy set-up interface, for example by selecting an icon on a desktop or within a folder of a computing device 102/104. In embodiments, a user may be given two options for creating a new power management policy, or editing an existing power management policy. In a first option, a user may be presented with a power management policy set-up template 172, as shown in Fig. 4, which guides the user through policy creation and/or editing. In a second option, a user may be presented with a script input interface 180, as shown in Fig. 5, allowing the user to create advanced power management policies from scratch.

In step 204, the policy agent 140 may prompt the user via the display as to whether the user wishes to use the template method or script method in creating/editing power management policies 142. If the template method is selected in step 204, in step 206, a user may be presented with the template 172 shown in Fig. 4. Referring to Fig. 4, the template 172 may include a number of different options for creating power management policies 142. The options shown may be used for example to create any of the power management policies 142 described above. However, the options shown are by way of example only, and the template 172 may include other policy options in addition to or instead of those that are shown. A user may select a particular policy option by checking a checkbox 174, or simply by filling in the input boxes 176 (some of which are numbered in Fig. 4) for a given policy option. In the illustrated example, the user may provide threshold battery life, threshold file sizes, percentage reduction and/or contextual circumstances in the input boxes 176. As noted, other power management policy options may be provided.

In step 208 of Fig. 3, the policy agent 140 confirms that valid template input has been received in input boxes 176. If not, a user may be prompted to add or correct the template input in step 212. Once acceptable template input has been provided, a user may save the created power management policy 142, which may be stored for example in non-volatile memory 144 in step 226.

As shown in step 216, if the user does not select the template option in step 204, and instead selects the option to create a power management policy from scratch, the user may be presented with the script input interface 180 as shown in Fig. 5. Referring to Fig. 5, a user may key in script 182 to define a power management policy 142. A user may input a power management policy using the syntactical vocabulary defined for power management policies. Alternatively, a user may input script 182, which may thereafter be compiled into the syntax defined for power management policies. The script 182 in Fig. 5 is by way of example, and the user may input any of a wide variety of scripts to define different power management policies.

In step 220 of Fig. 3, the policy agent 140 confirms that valid syntax and input for a power management policy has been received. If not, a user may be prompted to add or correct the syntax and/or input in step 224. Once valid script 182 has been provided, a user may save the created power management policy 142, which may be stored for example in non-volatile memory 144 in step 226. A user may be given the option of creating an additional policy in step 228, or the user may exit the interface in step 230.

It is understood that one or more other steps may be performed in addition to or instead of the steps shown in the flowchart of Fig. 3. In order to edit an existing power management policy 142, the user may be given the option to retrieve the power management policy, which may then be displayed in either the template 172 or script input interface 180, depending on how it was created. Thereafter, a user may edit and save the power management policy as described above. In this way, power management policies may be fine-tuned and evolve over time.

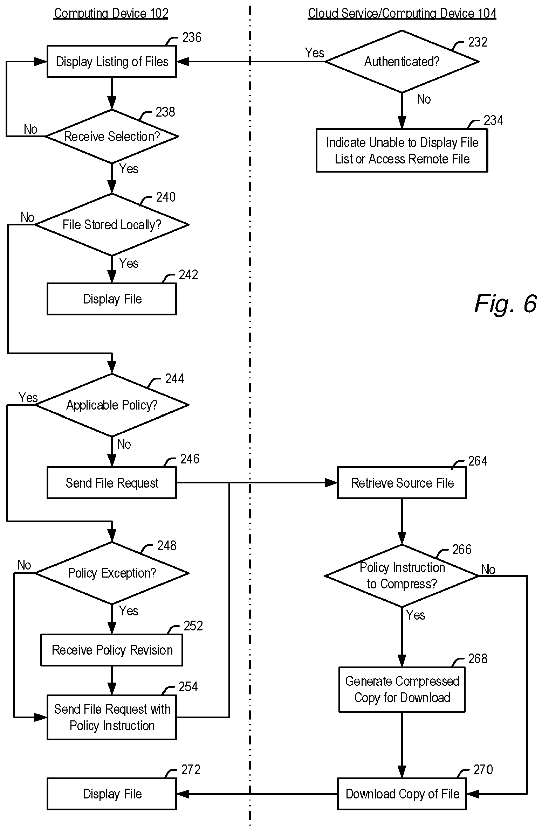

Once one or more power management policies 142 have been created, the policy agent 140 may implement the power management policies to conserve and manage power during download of files to the computing device 102. Fig. 6 sets forth an example flowchart of the operation of the policy agent 140 to conserve and manage power in computing device 102.

In embodiments, a user may initially log in to cloud service 106 in step 232. If login is unsuccessful, a user will be unable to access remote files through cloud service 106, and the user may be notified in step 234. Assuming successful login, the computing device 102 may display a list of files which may be selected by the user in step 236. This list may include files stored locally on computing device 102, and may include files stored remotely on (or otherwise available to) cloud service 106. The listing of files may for example be by graphic thumbnails or text on the display 160 of the computing device 102.

In step 238, the policy agent 140 (or the operating system 134) checks whether a file has been selected. If so, the policy agent 140 or operating system 134 checks in step 240 whether the file is stored locally on non-volatile memory 144. If the file is stored locally, there is no need to apply a power management policy (as there is no download of data to computing device 102). The file may then be opened, and (assuming the file is a viewable image or text file) the file may be displayed in step 242.

On the other hand, if it is determined in step 240 that the file is not stored locally, the policy agent 140 may check in step 244 whether there is a policy applicable to the selected file. In particular, the size of the remote files may be transmitted to the computing device 102, along with the filename and other file properties, when the file list is displayed in step 236. In step 244, the policy agent 140 may check to see if there are any power management policies which apply, given the current battery life of the computing device 102, the size of the selected file, and possibly other contextual circumstances which may be included in power management policies 142. If no applicable policy is identified in step 244, the computing device 102 may send a request to the cloud service 106 to download the selected file in step 246.

On the other hand, if an applicable power management policy is detected in step 244, the policy agent 140 may next look for a policy exception in step 248. In particular, while embodiments of the present technology allow users to establish power management policies that generally govern the download of files, a user is given an option to override an established policy "on the fly" in any given instance of downloading a file. The user may for example wish to see the file in its original (uncompressed) state and thus overrides a policy which would have otherwise compressed the file.

A user may be prompted after selection of a remote file to download whether they would like to override an identified policy. The user may then specify a revision to the policy in step 252. An interface may be presented to the user, such as for example the template 172 or script input interface 180 of Figs. 4 and 5, allowing the user to modify or ignore the policy. The user may also specify whether this is a one-time or permanent modification to the applicable power management policy.

If no policy exception is received in step 248, a request for the selected file may be sent to cloud service 106 in step 254 together with a policy instruction of how much to compress the selected file prior to download per the power management policy. If a policy exception is received in step 248, a request for the selected file may be sent to cloud service 106 in step 254 together with a policy instruction of how much to compress the selected file prior to download per the power management policy as modified in step 252.

In step 264, the cloud service 106 receives the file request (either via step 246 with no policy instruction, or via step 254 with a policy instruction) and retrieves the source file. The cloud service 106 may retrieve the source file from its local data store 126 (Fig. 1). Alternatively, the cloud service 106 may have access to files stored on one or more of the computing devices 104. Where the selected remote file is stored on a computing device 104, the selected remote file may be uploaded by the cloud service 106 from the computing device 104 to the cloud service in step 264.

In step 266, the cloud service 106 determines whether the request for the file included a policy instruction to compress the file before it is downloaded to the computing device 102. If so, the cloud service 106 may generate a compressed copy of the source file for download in step 268. The source file may be compressed in accordance with any known data compression scheme. The amount of the data compression is specified in the policy instruction.

In step 270, a copy of the requested file is downloaded from cloud service 106 to the computing device 102. If an applicable power management policy was identified, the copy of the file is compressed in step 268 before download. If no applicable power management policy was identified, the copy of the file is downloaded without data compression. The downloaded file is then received within the computing device 102. Where the file is for example a photograph, the file may be displayed in step 272.

In the above-described steps of Fig. 6, the computing device 102 communicated with the cloud service 106 via network 108 to download files which were stored on either the cloud service 106 or a computing device 104. In further embodiments, the steps of Fig. 6 may be used to download files to computing device 102 directly from a computing device 104 (i.e., not through cloud service 106). As noted above, computing device 102 may have a direct network connection to one or more computing devices 104, such as for example by a wireless personal area network. Thus, where the computing device 102 is authenticated and has access to resources on a computing device 104, the computing device 102 may send a direct request to download a selected file from the computing device 104, together with any policy instruction. The file may then be sent directly to the computing device 102, either uncompressed, or compressed by the computing device 104 before download in accordance with any applicable power management policy 142 as described above with the respect to Fig. 6.

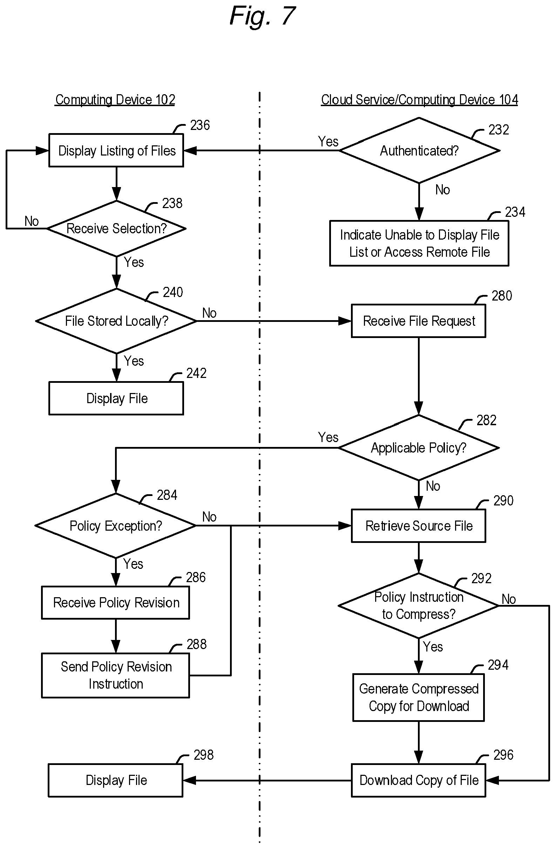

Fig. 7 illustrates an alternative embodiment of the present technology, where the policy agent 140 and the one or more power management policies 142 may be stored on and run from a server in the cloud service 106. In one such example, the power management policies 142 may be uploaded from the computing device 102 to the cloud service 106 when the user first logs into the cloud service 106 from computing device 102. In another example, a power management policy 142 may be uploaded from the computing device 102 or 104 when the power management policy is created. In this later embodiment, the computing device 102 need not store any power management policy and need not include the policy agent 140. Thus, in different embodiments, the policy agent 140 may be stored on and run from the computing device 102, it may be stored on and run from the cloud service 106, and it may be stored on and run from both the computing device 102 and cloud service 106.

In the embodiment of Fig. 7, the computing device 102 may be authenticated on cloud service 106 in steps 232 and 234 as described above. The computing device 102 may also display selected files that are stored locally on computing device 102 in steps 236, 238, 240 and 242 as described above. If it is determined in step 240 that the requested file is not stored on the computing device 102, the file request may be sent to the cloud service 106 and received in step 280.

In step 282, the policy agent 140 on the cloud service 106 may determine if a power management policy stored in the data store 126 of cloud service 106 is applicable to the requested file. In particular, the cloud service 106 has the size of the requested file. Cloud service 106 may also receive notification from the computing device 102 of the battery life remaining within the computing device 102. This notification may be sent when the user logs into the cloud service 106 in step 232, when the file request is received in the cloud service 106 in step 280, or at any time in between. From this information, the policy agent 140 on the cloud service 106 is able to identify any power management policy 142 that applies to the requested file.

If no applicable policy is identified in step 282, the source file may be retrieved in step 290. If an applicable policy is found in step 282, a query may be sent to the computing device 102 and displayed to the user in step 284 as to whether the user would like to apply a policy exception to the identified power management policy with respect to the file to be downloaded. If not, the cloud service 106 retrieves the source file in step 290. If the user wishes to revise the identified policy in step 284, the policy revision is received in step 286, and the revised policy instruction is sent to the cloud service in step 288, as described above.

In step 292, the policy agent 140 on cloud service 106 determines whether there is a policy instruction to compress the requested file (either per the original stored policy or per any revision by the user). If so, the cloud service 106 may generate a compressed copy of the source file for download in step 294. The source file may be compressed in accordance with any known data compression scheme. The amount of the data compression is specified in the policy instruction. Step 294 may include the step of checking whether the file to be downloaded is of a type that can be compressed. For example, the cloud service 106 may maintain a list of file types that can be compressed, together with a data compression scheme for compressing files of that type. Once it is confirmed that the requested file is of a type that can be compressed, such as a photograph or other image file, the file may be compressed in step 294. If the file is of a type that may not be compressed, step 294 may return the uncompressed copy of the file.

In step 296, a copy of the requested file is downloaded from cloud service 106 to the computing device 102. If an applicable power management policy was identified, the copy of the file is compressed in step 294 before download. If no applicable power management policy was identified, the copy of the file is downloaded without data compression. Where the file is for example a photograph, the file may be displayed in step 298.

In the above-described steps of Fig. 7, the computing device 102 communicated with the cloud service 106 via network 108 to download files which were stored on either the cloud service 106 or a computing device 104. In further embodiments, the steps of Fig. 7 may be used to download files to computing device 102 directly from a computing device 104. In this embodiment, one or more computing devices 104 may implement a policy agent 140 and may store the one or more power management policies. Thus, where the computing device 102 is authenticated and has access to resources on a computing device 104, the computing device 102 may send a direct request to download a selected file from the computing device 104 (instead of through the cloud service 106). In such embodiments, the computing device 104 may compress the file, per any power management policies on computing device 104, before download from the computing device 104 as described above with the respect to Fig. 7.

In embodiments described above, the computing device 102 may request a file to be downloaded from a cloud service 106 or computing device 104, which file may be compressed prior to download per any applicable power management policy. However, there may be a wide variety of other scenarios where a photograph, image or other media content file is downloaded to the computing device 102. For example, as noted above, a network topology 100 may include a third-party service 128 (Fig. 1). Third-party service 128 may for example be a website, cloud storage site or content provider storing and/or serving photos and other image files, video files and/or audio files. In embodiments, a user may connect with third-party service 128 via network 108 to download content from third-party service 128. Where this content is images or other data which may be compressed, such data may be compressed in accordance with power management policies stored on the computing device 102 prior to download as described above.

Additionally, instead of a user request from the computing device 102, photographs, images and other media content may be pushed to the computing device 102 from cloud service 106 and/or a third-party service 128. Where this content is images or other data which may be compressed, such data may be compressed in accordance with the power management policies before download as described above.

The present technology provides the benefit of allowing photographs and other files to be viewed, listened to or otherwise experienced on a computing device 102 while reducing the amount of power required to download those files. Thus, power consumption may be optimized and battery power life in computing device 102 extended. The present technology may be particularly beneficial in embodiments where computing device 102 is a smart watch or other wearable computer. A smart watch may have a small display 160 with a screen resolution of for example 286 dots per inch. In such an example, a 5MB source image may be reduced 100 times to 50KB in accordance with aspects of the present technology, and display normally on a smart watch display 160.

The present technology may also be beneficial in other embodiments of computing device 102 having a small display screen, such as for example smart phones and tablets and other computing devices having a display smaller than 8 inches (diagonal). This dimension is by way of example only and may be larger or smaller in further embodiments. Additionally, as noted above, the present technology may be beneficial, and used with, a variety of other types of computing device 102, including for example desktop computers, laptop computers and other computing devices.

In accordance with the above advantages, the present technology may include a system for managing power use in a computing device, comprising: means for receiving one or more power management policies relating to conditions under which a file to be downloaded is to be compressed prior to download; means for identifying whether a received power management policy of the one or more power management policies applies to the file to be downloaded based on at least a level of power remaining in the computing device; and means for generating an instruction to reduce a size of the file before download if the received power management policy is identified as being applicable to the file to be downloaded.

Fig. 8 illustrates details of a computing environment 300, which may be an example of computing device 102, computing devices 104 or a server as described herein, for implementing aspects of the present technology. Components of computing environment 300 may include, but are not limited to, a processor 302, a system memory 304, computer readable storage media 306, various system interfaces and a system bus 308 that couples various system components. The system bus 308 may be any of several types of bus structures including a memory bus or memory controller, a peripheral bus, and a local bus using any of a variety of bus architectures. The processing unit 130, system memory 132, non-volatile memory 144 and bus 136 of Fig. 2 may be examples of processor 302, a system memory 304, storage media 306 and system bus 308, respectively.

The computing environment 300 may include computer readable media. Computer readable media can be any available tangible media that can be accessed by the computing environment 300 and includes both volatile and nonvolatile media, removable and non-removable media. Computer readable media does not include transitory, modulated or other transmitted data signals that are not contained in a tangible media. The system memory 304 includes computer readable media in the form of volatile and/or nonvolatile memory such as ROM 310 and RAM 312. RAM 312 may contain an operating system 313 for computing environment 300. RAM 312 may also execute one or more application programs 314, including for example the policy agent 140. The computer readable media may also include storage media 306, such as hard drives, optical drives and flash drives.

The computing environment 300 may include a variety of interfaces for the input and output of data and information. Input interface 316 may receive data from different sources including touch (in the case of a touch sensitive screen), a mouse 324 and/or keyboard 322. A video interface 330 may be provided for interfacing with a touchscreen 331 and/or monitor 332, such as display 160. A peripheral interface 336 may be provided for supporting peripheral devices, including for example a printer 338.

The computing environment 300 may operate in a networked environment via a network interface 340 using logical connections to one or more remote computers 344, 346. The logical connection to computer 344 may be a local area connection (LAN) 348, and the logical connection to computer 346 may be via the Internet 350. Other types of networked connections are possible, including broadband communications as described above. It is understood that the above description of computing environment 300 is by way of example only, and may include a wide variety of other components in addition to or instead of those described above.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The aspects of the disclosure herein were chosen and described in order to best explain the principles of the disclosure and the practical application, and to enable others of ordinary skill in the art to understand the disclosure with various modifications as are suited to the particular use contemplated.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing device (102) comprising:
a rechargeable battery (170); and
a processor (130) operable to: receive one or more power management policies (142) relating to conditions under which a file to be downloaded from a source at a remote location is to be compressed before download; identify whether a received power management policy of the one or more power management policies (142) applies to a file to be downloaded based on at least a level of power remaining in the rechargeable battery, and generate an instruction to the source at the remote location to compress the file before download if the received power management policy is identified as being applicable to the file to be downloaded,
wherein the processor (130) is further operable to identify whether the received power management policy applies to a file to be downloaded based on a level of power remaining in the rechargeable battery, the size of the file to be downloaded and a contextual circumstance, wherein the contextual circumstance comprises temporal and/or geographic contextual circumstances, wherein the temporal contextual circumstances comprise one of the following: time of day or day of the week.

2. The computing device (102) of claim 1, wherein the computing device (102) is a wearable computer or a smart watch.

3. The computing device (102) of any one of claims 1 or 2, wherein the processor (130) is further operable to identify whether the received power management policy applies to a file to be downloaded based on a level of power remaining in the rechargeable battery and a size of the file to be downloaded.

4. The computing device (102) of any one of claims 1 or 2, wherein the processor (130) is further operable to generate the instruction indicating by how much the file is to be compressed before download in accordance with a parameter specified in the received power management policy.

5. A computing device (106) associated with a cloud service, the computing device comprising:
a computer readable memory operable to store a file to be downloaded to a remote computing device (102); and
a processor operable to: receive a request from the remote computing device to download the file, the request including a notification indicating a power level of the remote computing device; receive one or more power management policies (142) relating to conditions under which files are to be compressed before download; identify whether a received power management policy of the one or more power management policies (142) applies to the file to be downloaded based on at least the level of power indicated in the notification, and compress the file before download if the received power management policy is identified as being applicable to the file to be downloaded,
wherein the processor is further operable to identify whether the received power management policy applies to the file based on the level of power indicated in the notification, a size of the file to be downloaded, and a contextual circumstance, wherein the contextual circumstance comprises temporal and/or geographic contextual circumstances, wherein the temporal contextual circumstances comprise one of the following: time of day or day of the week.

6. The computing device (106) of claim 5, wherein the file is stored in the computer readable memory at a time the request to download the file is received.

7. The computing device (106) of claim 5, the remote computing device comprising a first remote computing device, the file being stored in a second remote computing device at a time the request to download the file is received, the computing device downloading the file from the second remote computing device when the request to download the file is received.

8. A method of managing power use in a computing device (102), comprising:
(a) receiving one or more power management policies (142) relating to conditions under which a file to be downloaded from a source at a remote location is to be compressed before download;
(b) identifying whether a received power management policy of the one or more power management policies (142) applies to a file to be downloaded based on the level of power indicated in the notification, a size of the file to be downloaded, and a contextual circumstance, wherein the contextual circumstance comprises temporal and/or geographic contextual circumstances, wherein the temporal contextual circumstances comprise one of the following: time of day or day of the week; and
(c) generating an instruction to the source at the remote location to compress the file before download if the received power management policy is identified as being applicable to the file to be downloaded.

9. The method of claim 8, further comprising the step of generating a user interface allowing a user to define the one or more power management policies (142).

10. The method of claim 8, further comprising the step of receiving an instruction to override the power management policy identified in said step (b) prior to said step (c) of generating an instruction to compress the file.

11. The method of claim 8, wherein said steps (a), (b) and (c) are performed by the computing device.

12. The method of claim 8, wherein said steps (a), (b) and (c) are performed by a cloud service having a network connection to the computing device, and wherein said step (a) of receiving one or more power management policies (142) comprises the step of one or more power management policies (142) are uploaded to the cloud service from the computing device (102).

## Patentansprüche

1. Datenverarbeitungsvorrichtung (102), umfassend:
eine wiederaufladbare Batterie (170); und
einen Prozessor (130), der betreibbar ist, um: eine oder mehrere Energieverwaltungsrichtlinien (142) zu empfangen, die sich auf Bedingungen beziehen, unter denen eine von einer Quelle an einem entfernten Standort herunterzuladende Datei vor dem Herunterladen komprimiert werden soll; zu identifizieren, ob eine empfangene Energieverwaltungsrichtlinie der einen oder der mehreren Energieverwaltungsrichtlinien (142) auf eine herunterzuladende Datei anwendbar ist, basierend auf wenigstens einem in der wiederaufladbaren Batterie verbleibenden Energieniveau, und eine Anweisung an die Quelle an dem entfernten Standort zu erzeugen, die Datei vor dem Herunterladen zu komprimieren, wenn die empfangene Energieverwaltungsrichtlinie als auf die herunterzuladende Datei anwendbar identifiziert wird,
wobei der Prozessor (130) ferner betreibbar ist, um zu identifizieren, ob die empfangene Energieverwaltungsrichtlinie auf eine herunterzuladende Datei anwendbar ist, basierend auf einem in der wiederaufladbaren Batterie verbleibenden Energieniveau, der Größe der herunterzuladenden Datei und einer Kontextbedingung, wobei die Kontextbedingung zeitliche und/oder geografische Kontextbedingungen umfasst, wobei die zeitlichen Kontextbedingungen eines der folgenden umfassen: Tageszeit oder Wochentag.

2. Computervorrichtung (102) nach Anspruch 1, wobei die Computervorrichtung (102) ein tragbarer Computer oder eine intelligente Uhr ("Smartwatch") ist.

3. Computervorrichtung (102) nach einem der Ansprüche 1 oder 2, wobei der Prozessor (130) ferner betreibbar ist, um zu identifizieren, ob die empfangene Energieverwaltungsrichtlinie auf eine herunterzuladende Datei anwendbar ist, basierend auf einem in der wiederaufladbaren Batterie verbleibenden Energieniveau und einer Größe der herunterzuladenden Datei.

4. Computervorrichtung (102) nach einem der Ansprüche 1 oder 2, wobei der Prozessor (130) ferner betreibbar ist, um die Anweisung zu erzeugen, die angibt, um wie viel die Datei vor dem Herunterladen in Übereinstimmung mit einem Parameter, der in der empfangenen Energieverwaltungsrichtlinie angegeben ist, komprimiert werden soll.

5. Computervorrichtung (106),
die mit einem Cloud-Dienst assoziiert ist, wobei die Computervorrichtung umfasst:
einen computerlesbaren Speicher, der betreibbar ist, um eine herunterzuladende Datei auf eine entfernte Computervorrichtung (102) zu speichern; und
einen Prozessor, der betreibbar ist, um: eine Anforderung von der entfernten Computervorrichtung zum Herunterladen der Datei zu empfangen, wobei die Anforderung eine Benachrichtigung enthält, die ein Energieniveau der entfernten Computervorrichtung angibt; eine oder mehrere Energieverwaltungsrichtlinien (142) zu empfangen, die sich auf Bedingungen beziehen, unter denen Dateien vor dem Herunterladen komprimiert werden sollen; basierend auf wenigstens dem in der Benachrichtigung angegebenen Energieniveau zu identifizieren, ob eine empfangene Energieverwaltungsrichtlinie der einen oder der mehreren Energieverwaltungsrichtlinien (142) auf die herunterzuladende Datei anwendbar ist, und die Datei vor dem Herunterladen zu komprimieren, wenn die empfangene Energieverwaltungsrichtlinie als auf die herunterzuladende Datei anwendbar identifiziert wird,
wobei der Prozessor ferner betreibbar ist, um zu identifizieren, ob die empfangene Energieverwaltungsrichtlinie auf die Datei anwendbar ist, basierend auf dem in der Benachrichtigung angegebenen Energieniveau, einer Größe der herunterzuladenden Datei und einer Kontextbedingung, wobei die Kontextbedingung zeitliche und/oder geografische Kontextbedingungen umfasst, wobei die zeitlichen Kontextbedingungen eines der folgenden umfassen: Tageszeit oder Wochentag.

6. Computervorrichtung (106) nach Anspruch 5, wobei die Datei zu einem Zeitpunkt, zu dem die Anforderung zum Herunterladen der Datei empfangen wird, im computerlesbaren Speicher gespeichert wird.

7. Computervorrichtung (106) nach Anspruch 5, wobei die entfernte Computervorrichtung eine erste entfernte Computervorrichtung umfasst, wobei die Datei zu einem Zeitpunkt, zu dem die Anforderung zum Herunterladen der Datei empfangen wird, in einer zweiten entfernten Computervorrichtung gespeichert wird, wobei die Computervorrichtung die Datei von der zweiten entfernten Computervorrichtung herunterlädt, wenn die Anforderung zum Herunterladen der Datei empfangen wird.

8. Verfahren zum Verwalten des Energieverbrauchs in einer Computervorrichtung (102), umfassend:
(a) Empfangen einer oder mehrerer Energieverwaltungsrichtlinien (142), die sich auf Bedingungen beziehen, unter denen eine von einer Quelle an einem entfernten Standort herunterzuladende Datei vor dem Herunterladen komprimiert werden soll;
(b) Identifizieren, ob die empfangene Energieverwaltungsrichtlinie der einen oder der mehreren Energieverwaltungsrichtlinien (142) auf eine herunterzuladende Datei anwendbar ist, basierend auf dem in der Benachrichtigung angegebenen Energieniveau, einer Größe der herunterzuladenden Datei und einer Kontextbedingung, wobei die Kontextbedingung zeitliche und/oder geografische Kontextbedingungen umfasst, wobei die zeitlichen Kontextbedingungen eines der Folgenden umfassen: Tageszeit oder Wochentag; und
(c) Erzeugen einer Anweisung an die Quelle an dem entfernten Standort, die Datei vor dem Herunterladen zu komprimieren, wenn die empfangene Energieverwaltungsrichtlinie als auf die herunterzuladende Datei anwendbar identifiziert wird.

9. Verfahren nach Anspruch 8, ferner den Schritt umfassend, eine Benutzerschnittstelle zu erzeugen, die es einem Benutzer ermöglicht, die eine oder die mehreren Energieverwaltungsrichtlinien (142) zu definieren.

10. Verfahren nach Anspruch 8, ferner den Schritt umfassend, eine Anweisung zum Außerkraftsetzen der in Schritt (b) identifizierten Energieverwaltungsrichtlinie zu empfangen, vor dem Schritt (c) des Erzeugens einer Anweisung zum Komprimieren der Datei.

11. Verfahren nach Anspruch 8, wobei die Schritte (a), (b) und (c) von der Computervorrichtung durchgeführt werden.

12. Verfahren nach Anspruch 8, wobei die Schritte (a), (b) und (c) von einem Cloud-Dienst mit Netzverbindung zur Computervorrichtung durchgeführt werden und wobei der Schritt (a) des Empfangens einer oder mehrerer Energieverwaltungsrichtlinien (142) den Schritt umfasst, dass eine oder mehrere Energieverwaltungsrichtlinien (142) von der Computervorrichtung (102) an den Cloud-Dienst hochgeladen werden.

## Revendications

1. Dispositif informatique (102) comprenant :
une batterie rechargeable (170) ; et
un processeur (130) permettant de : recevoir une ou plusieurs stratégies de gestion d'énergie (142) relatives à des conditions dans lesquelles un fichier, qui doit être téléchargé depuis une source située à un emplacement distant, doit être compressé avant son téléchargement ; identifier si une stratégie de gestion d'énergie reçue, parmi la ou les stratégies de gestion d'énergie (142), s'applique à un fichier à télécharger, sur la base d'au moins un niveau d'énergie restant dans la batterie rechargeable, et générer une instruction pour la source située à l'emplacement distant pour compresser le fichier avant son téléchargement s'il est identifié que la stratégie de gestion d'énergie reçue est applicable au fichier à télécharger,
le processeur (130) permettant en outre d'identifier si la stratégie de gestion d'énergie reçue s'applique à un fichier à télécharger, sur la base d'un niveau d'énergie restant dans la batterie rechargeable, de la taille du fichier à télécharger et d'une circonstance contextuelle, la circonstance contextuelle comprenant des circonstances contextuelles temporelles et/ou géographiques, les circonstances contextuelles temporelles comprenant une des circonstances suivantes : une heure du jour ou un jour de la semaine.

2. Dispositif informatique (102) selon la revendication 1, le dispositif informatique (102) étant un ordinateur portatif ou une montre intelligente.

3. Dispositif informatique (102) selon l'une quelconque des revendications 1 et 2, dans lequel le processeur (130) permet en outre d'identifier si la stratégie de gestion d'énergie reçue s'applique à un fichier à télécharger, sur la base d'un niveau d'énergie restant dans la batterie rechargeable et d'une taille du fichier à télécharger.

4. Dispositif informatique (102) selon l'une quelconque des revendications 1 et 2, dans lequel le processeur (130) permet en outre de générer l'instruction indiquant dans quelle mesure le fichier doit être compressé avant son téléchargement, selon un paramètre spécifié dans la stratégie de gestion d'énergie reçue.

5. Dispositif informatique (106) associé à un service en nuage, le dispositif informatique comprenant :
une mémoire lisible par ordinateur, permettant de stocker un fichier qui doit être téléchargé sur un dispositif informatique distant (102) ; et
un processeur permettant de : recevoir une demande en provenance du dispositif informatique distant pour télécharger le fichier, la demande incluant une notification indiquant un niveau d'énergie du dispositif informatique distant ; recevoir une ou plusieurs stratégies de gestion d'énergie (142) relatives à des conditions dans lesquelles des fichiers doivent être compressés avant leur téléchargement ; identifier si une stratégie de gestion d'énergie reçue, parmi la ou les stratégies de gestion d'énergie (142), s'applique au fichier à télécharger, sur la base, au moins, du niveau d'énergie indiqué dans la notification, et compresser le fichier avant son téléchargement s'il est identifié que la stratégie de gestion d'énergie reçue est applicable au fichier à télécharger,
le processeur permettant en outre d'identifier si la stratégie de gestion d'énergie reçue s'applique au fichier, sur la base du niveau d'énergie indiqué dans la notification, d'une taille du fichier à télécharger et d'une circonstance contextuelle, la circonstance contextuelle comprenant des circonstances contextuelles temporelles et/ou géographiques,
les circonstances contextuelles temporelles comprenant une des circonstances suivantes :
une heure du jour ou un jour de la semaine.

6. Dispositif informatique (106) selon la revendication 5, dans lequel le fichier est stocké dans la mémoire lisible par ordinateur à un moment où la demande de téléchargement du fichier est reçue.

7. Dispositif informatique (106) selon la revendication 5, le dispositif informatique distant comprenant un premier dispositif informatique distant, le fichier étant stocké sur un second dispositif informatique distant à un moment où la demande de téléchargement du fichier est reçue, le dispositif informatique téléchargeant le fichier depuis le second dispositif informatique distant quand la demande de téléchargement du fichier est reçue.

8. Procédé de gestion d'une utilisation d'énergie dans un dispositif informatique (102), comprenant les étapes consistant à :
(a) recevoir une ou plusieurs stratégies de gestion d'énergie (142) relatives à des conditions dans lesquelles un fichier, qui doit être téléchargé depuis une source située à un emplacement distant, doit être compressé avant son téléchargement ;
(b) identifier si une stratégie de gestion d'énergie reçue, parmi la ou les stratégies de gestion d'énergie (142), s'applique à un fichier à télécharger, sur la base du niveau d'énergie indiqué dans la notification, d'une taille du fichier à télécharger et d'une circonstance contextuelle, la circonstance contextuelle comprenant des circonstances contextuelles temporelles et/ou géographiques, les circonstances contextuelles temporelles comprenant une des circonstances suivantes : une heure du jour ou un jour de la semaine ; et
(c) générer une instruction pour la source située à l'emplacement distant pour compresser le fichier avant son téléchargement s'il est identifié que la stratégie de gestion d'énergie reçue est applicable au fichier à télécharger.

9. Procédé selon la revendication 8, comprenant en outre l'étape consistant à générer une interface d'utilisateur permettant à un utilisateur de définir la ou les stratégies de gestion d'énergie (142).

10. Procédé selon la revendication 8, comprenant en outre l'étape consistant à recevoir une instruction pour remplacer la stratégie de gestion d'énergie identifiée à ladite étape (b) avant ladite étape (c) de génération d'une instruction pour compresser le fichier.

11. Procédé selon la revendication 8, dans lequel lesdites étapes (a), (b) et (c) sont réalisées par le dispositif informatique.

12. Procédé selon la revendication 8, dans lequel lesdites étapes (a), (b) et (c) sont réalisées par un service en nuage ayant une connexion de réseau au dispositif informatique, et dans lequel ladite étape (a) de réception d'une ou plusieurs stratégies de gestion d'énergie (142) comprend l'étape dans laquelle une ou plusieurs stratégies de gestion d'énergie (142) sont téléversées vers le service en nuage depuis le dispositif informatique (102).
